(19) Europäisches Patentamt
European Patent Office
Office européen des brevets

(11) **EP 4 512 610 A1**

(12) **EUROPEAN PATENT APPLICATION**

(43) Date of publication:
**26.02.2025 Bulletin 2025/09**

(21) Application number: **24191144.5**

(22) Date of filing: **26.07.2024**

(51) International Patent Classification (IPC):
**B32B 5/26** (2006.01)   **B32B 3/12** (2006.01)
**B32B 5/18** (2006.01)   **B32B 5/24** (2006.01)
**B32B 7/02** (2019.01)

(52) Cooperative Patent Classification (CPC):
**B32B 3/12; B32B 5/18; B32B 5/245; B32B 5/26;
B32B 7/02;** B32B 2250/40; B32B 2260/021;
B32B 2260/023; B32B 2260/046; B32B 2262/106;
B32B 2307/718; B32B 2307/7376; B32B 2605/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.08.2023 JP 2023136305**

(71) Applicants:
• **Subaru Corporation
Tokyo 150-8554 (JP)**

• **GH Craft Ltd.
Gotenba-shi
Shizuoka 412-0048 (JP)**

(72) Inventors:
• **HIRABAYASHI, Daisuke
Tokyo, 150-8554 (JP)**
• **SUYAMA, Yoichi
Shizuoka, 412-0048 (JP)**
• **SUKEMUNE, Takeshi
Shizuoka, 412-0048 (JP)**

(74) Representative: **Vossius & Partner
Patentanwälte Rechtsanwälte mbB
Siebertstrasse 3
81675 München (DE)**

(54) **SANDWICH STRUCTURE, METHOD OF PRODUCING SANDWICH STRUCTURE, AND AIRCRAFT**

(57) A sandwich structure includes a first ply of CFRP, a second ply of CFRP and a honeycomb or foam core. The first ply of the CFRP includes first carbon fibers and thermoset resin which is matrix reinforced with the first carbon fibers. The second ply of the CFRP includes second carbon fibers and thermoset resin which is matrix reinforced with the second carbon fibers. The core is sandwiched between the first and second plies of the CFRP. Ply thicknesses of the first and second plies of the CFRP are each not less than 0.05 mm and not more than 0.15 mm. The first thermoset resin is directly bonded to the core without interposing any other layer between the first thermoset resin and the core. The second thermoset resin is directly bonded to the core without interposing any other layer between the second thermoset resin and the core.

(P1) LAMINATING   (P2) BONDING AND CURING   (P3) TAKING OUT

FIG. 1

EP 4 512 610 A1

## Description

FIELD

Embodiments described herein relate generally to a sandwich structure, a method of producing a sandwich structure, and an aircraft.

BACKGROUND

Conventionally, a sandwich structure in which a honeycomb core is sandwiched between fiber reinforced plastics (FRP) also called composite materials, such as glass fiber reinforced plastics (GFRP), carbon fiber reinforced plastics (CFRP), and aramid fiber reinforced plastics (AFRP), is known (for example, refer to International Publication No. 2018/174217, Japanese Patent Application Publication JP2013-001006A, Japanese Patent Application Publication JP S58-082755A and publication after examination of Japanese Utility Model Application JP S61-023385 Y).

Similar to an FRP, a sandwich structure is mainly used as a structural material for an aircraft. In recent years, a sandwich structure is attracting attention as a potential structural material not only for a fixed-wing aircraft or a rotary-wing aircraft, such as a helicopter, but also for an air mobility also called a drone or a flying car. A small aircraft, such as an air mobility, requires less strength of structural materials than that of a large aircraft, such as a fixed-wing aircraft. Therefore, in case of using a sandwich structure as a structural material for an air mobility, a sandwich structure in which a honeycomb core is sandwiched between FRP plates whose thicknesses are thinner than those of the conventional sandwich structure used as a structural member for a large aircraft can be use as a structural material.

An object of the present invention is to further reduce the weight of a sandwich structure used as a structural member of a small aircraft, such as an air mobility.

SUMMARY

In general, according to one embodiment, a sandwich structure includes at least one first ply of carbon fiber reinforced plastic, at least one second ply of carbon fiber reinforced plastic and a core. The at least one first ply of the carbon fiber reinforced plastic includes first carbon fibers and first thermoset resin which is matrix reinforced with the first carbon fibers. The at least one second ply of the carbon fiber reinforced plastic includes second carbon fibers and second thermoset resin which is matrix reinforced with the second carbon fibers. The core is sandwiched between the at least one first ply of the carbon fiber reinforced plastic and the at least one second ply of the carbon fiber reinforced plastic. The core is a honeycomb core or a foam core. A first ply thickness of the at least one first ply of the carbon fiber reinforced plastic and a second ply thickness of the at least one second ply of the carbon fiber reinforced plastic are each not less than 0.05 mm and not more than 0.15 mm. The first thermoset resin is directly bonded to the core without interposing any other layer between the first thermoset resin and the core. The second thermoset resin is directly bonded to the core without interposing any other layer between the second thermoset resin and the core.

Further, according to one embodiment, an aircraft includes a structural material made of the above-mentioned sandwich structure.

Further, according to one embodiment, a method of producing a sandwich structure, having at least one first ply of carbon fiber reinforced plastic, at least one second ply of carbon fiber reinforced plastic and a core, includes: using a first prepreg sheet, of which thickness is not less than 0.05 mm and not more than 0.15 mm, including first carbon fibers and first uncured thermoset resin which is matrix reinforced with the first carbon fibers, as a material of the at least one first ply of the carbon fiber reinforced plastic; using a second prepreg sheet, of which thickness is not less than 0.05 mm and not more than 0.15 mm, including second carbon fibers and second uncured thermoset resin which is matrix reinforced with the second carbon fibers, as a material of the at least one second ply of the carbon fiber reinforced plastic; heating and curing first uncured thermoset resin with the first uncured thermoset resin in direct contact with one side of the core without interposing any other layer between the first uncured thermoset resin and the core so that the first cured thermoset resin is directly bonded to the one side of the core; and heating and curing second uncured thermoset resin with the second uncured thermoset resin in direct contact with another side of the core without interposing any other layer between the second uncured thermoset resin and the core so that the second cured thermoset resin is directly bonded to the another side of the core. The core is sandwiched between the at least one first ply of the carbon fiber reinforced plastic and the at least one second ply of the carbon fiber reinforced plastic. The core is a honeycomb core or a foam core.

BRIEF DESCRIPTION OF THE DRAWINGS

In the accompanying drawings:

FIG. 1 is a view for explaining a method of producing a sandwich structure according to the first embodiment of the present invention;

FIG. 2 is a perspective view showing a structural example of the honeycomb core shown in FIG. 1;

FIG. 3 is a view for explaining a modification of the method of producing a sandwich structure according to the first embodiment of the present invention;

FIG. 4 is a perspective view showing an example of an aircraft including structural materials consisting of the sandwich structures each produced by the method shown in FIG. 1 or 3;

FIG. 5 is a cross-sectional view of one of the arms of the aircraft shown in FIG. 4;

FIG. 6 is a sectional view of a conventional honeycomb sandwich structure;

FIG. 7 is a graph for explaining a problem of the conventional honeycomb sandwich structure;

FIG. 8 is a view for explaining a method of producing a sandwich structure according to the second embodiment of the present invention;

FIG. 9 is a view for explaining a modification of the method of producing a sandwich structure according to the second embodiment of the present invention;

FIG. 10 is a view for explaining a method of producing a sandwich structure according to the third embodiment of the present invention.

DETAILED DESCRIPTION

A sandwich structure, a method of producing a sandwich structure, and an aircraft according to embodiments of the present invention will be described with reference to accompanying drawings.

(First embodiment)

(Method of producing sandwich structure)

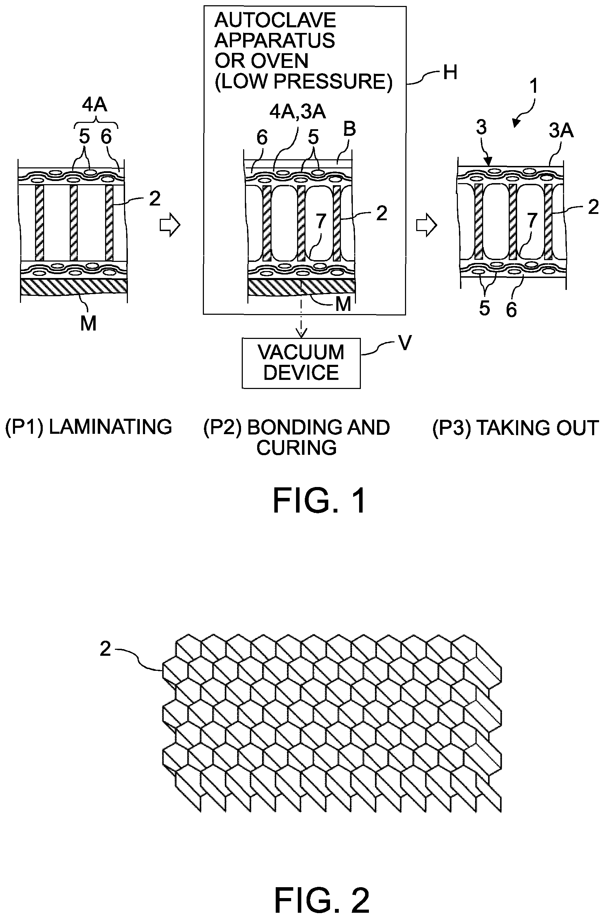

FIG. 1 is a view for explaining a method of producing a sandwich structure 1 according to the first embodiment of the present invention.

FIG. 1 shows a method of producing the sandwich structure 1 in which a honeycomb core 2 is sandwiched between two skins 3 each made of one ply of CFRP 3A. Each ply of the CFRP 3A is made by heating and curing a sheet of prepreg 4A, which is a material of the CFRP 3A.

Therefore, first in the process P1, the honeycomb core 2 sandwiched between the two prepregs 4A (the two prepreg sheets) is placed on a rigid lower mold M. Each of the prepregs 4A used includes carbon fibers 5 impregnated with uncured thermosetting resin 6. The carbon fibers 5 may be oriented in desired orientations although FIG. 1 shows an example in which each of the prepregs 4A used includes the carbon fibers 5 whose length direction is parallel to the paper surface and the carbon fibers 5 whose length direction is perpendicular to the paper surface, which cross each other.

In addition, the prepreg 4A having a self-adhesive property by reducing its fiber volume (VF) to a range of not less than 20 volume% and not more than 40 volume% is used. The VF is the volume percentage of fibers included in a prepreg or an FRP. Therefore, reducing the VF allows increasing the volume of resin included in a prepreg or an FRP, and thereby the self-adhesiveness of the prepreg can be improved by increasing the volume of the resin.

When fibers included in a prepreg are carbon fibers, the resin content (RC) of the prepreg corresponding to the VF of not less than 20 volume% and not more than 40 volume% is not less than 50 mass% and not more than 70 mass% assuming that a difference in resin density depending on a resin composition is negligible. The RC is the weight percentage of resin included in a prepreg. Therefore, it can be said that the prepreg 4A is a prepreg for the CFRP 3A that has self-adhesive property by increasing the RC to a range of not less than 50 mass% and not more than 70 mass%.

The VF of a prepreg for CFRP in which carbon fibers are impregnated with resin is usually about 40 volume% to 60 volume% and the RC is usually about 30 mass% to 50 mass%. This is because a too small VF (a too high RC) reduces the content of reinforcing fibers, and the mechanical properties of CFRP, such as specific strength and specific rigidity, which are superior compared to those of a metal material, deteriorate.

On the other hand, it was confirmed through tests that the prepreg 4A for the CFRP 3A with the VF reduced to a range of 20 volume% or more and 40 volume% or less, i.e., the prepreg 4A for the CFRP 3A with the RC increased to a range of 50 mass% or more and 70 mass% or less allowed a portion of the uncured thermosetting resin 6 to be used as an adhesive for bonding the prepreg 4A to the honeycomb core 2. That is, it was confirmed through tests that reducing the VF to not less than 20 volume% and not more than 40 volume% allowed bonding the prepreg 4A to the honeycomb core 2 using the uncured thermosetting resin 6 itself, which is a matrix (base material) included in the prepreg 4A and reinforced with the carbon fibers 5, as an adhesive without using any adhesive film or laminating any layer to give the prepreg 4A self-adhesive property.

As a result of testing on the prepregs 4A for the CFRP 3A, the following was confirmed. The smaller the VF is in the range of not less than 20 volume% and not more than 40 volume%, the better the self-adhesiveness of the prepreg 4A becomes. It is preferable to set the VF not less than 20 volume% and not more than 35 volume% from the viewpoint of improving the self-adhesiveness of the prepreg 4A for bonding the prepreg 4A to the honeycomb core 2. It is most preferable to set the VF to not less than 20 volume% and not more than 30 volume% from the viewpoint of improving the self-adhesiveness of the prepreg 4A for bonding the prepreg 4A to the honeycomb core 2.

Expressed in the RC, it is as follows. The higher the RC is in the range from 50 mass% to 70 mass%, the better the self-adhesiveness of the prepreg 4A becomes. It is preferable to set the RC not less than 55 mass% and not more than 70 mass% from the viewpoint of improving the self-adhesiveness of the prepreg 4A for bonding the prepreg 4A to the honeycomb core 2. It is most preferable to set the RC not less than 60 mass% and not more than 70 mass% from the viewpoint of improving the self-adhesiveness of the prepreg 4A for bonding the prepreg 4A to the honeycomb core 2. This is considered to be because the volume and mass of the uncured thermosetting resin 6 necessary for adhesion to the honeycomb core 2 increase as the RC increases while reducing the VF.

As a composition of the thermosetting resin 6 to which the self-adhesiveness is given, an epoxy resin having excellent heat resistance, elastic modulus and chemical resistance can be used, similar to a typical prepreg. In addition, various additives may be added to adjust physical properties of the thermosetting resin 6. As a specific example, a prepreg described in Japanese Patent Application Publication JP2019-156982A can be used as the prepreg 4A having the self-adhesive property to bond the prepreg 4A to the honeycomb core 2. More specifically, the prepreg 4A may be a prepreg whose carbon fibers are impregnated with an epoxy resin composition including an epoxy resin, an aromatic amine and dicyandiamide (DICY), which is a typical curing agent of the epoxy resin, and the VF is reduced to a range of not less than 20 volume% and not more than 40 volume% (the RC is increased to a range of not less than 50 mass% and not more than 70 mass%). Alternatively, as another specific example, a prepreg, described in International Publication No. 2018/174217, whose VF of the base prepreg is reduced to a range of not less than 20 volume% and not more than 40 volume% (RC is increased to a range of not less than 50 mass% and not more than 70 mass%) may be used as the prepreg 4A.

Examples of the epoxy resin include bifunctional epoxy resin, such as bisphenol epoxy resin, alcohol epoxy resin, biphenyl epoxy resin, hydrophthalate epoxy resin, dimer acid epoxy resin, and alicyclic epoxy resin; glycidyl ether epoxy resin, such as tetrakis (glycidyloxyphenyl) ethane and tris (glycidyloxyphenyl) methane; glycidyl amine epoxy resin, such as tetraglycidyl diamino diphenyl methane; naphthalene epoxy resin; phenol novolac epoxy resin that is novolac epoxy resin; and cresol novolac epoxy resin.

On the other hand, examples of the resin other than the epoxy resin include unsaturatedpolyester resin, vinyl ester resin, phenol resin, melamine resin, polyurethane resin, silicon resin, maleimide resin, cyanate ester resin and resin in which maleimide resin and cyanate ester resin are prepolymerized. A mixture of these kinds of resin may be used.

In addition, an urea-based curing accelerator, such as phenyl dimethyl urea (PDMU) and toluene bisdimethyl urea (TBDMU); a thermoplastic resin, such as polyimide, polyether imide, polysulfone, polyether sulfone, polyvinyl formal; and/or thickening particles, each consisting of a polymer including one or two or more monomer units of a methacrylic acid ester compound, an acrylic acid ester compound and a vinyl compound, may be added to the epoxy resin as additive or additives, as described in Japanese Patent Application Publication JP2019-156982A.

In case of using the prepregs 4A including the uncured thermosetting resin 6, having adhesive property with the honeycomb core 2, as a material for producing the sandwich structure 1, as described above, the honeycomb core 2 sandwiched between the two prepregs 4A can be placed on the lower mold M in a state where the uncured thermosetting resin 6 is directly contacted with each side of the honeycomb core 2 without any other layer, such as an adhesive film, between the honeycomb core 2 and each of the prepregs 4A, as shown in process P1. More specifically, the lower surface side prepreg 4A can be laminated on the lower mold M, and subsequently the honeycomb core 2 can be placed directly on the lower surface side prepreg 4A. After that, the upper surface side prepreg 4A can be laminated directly on the honeycomb core 2.

Therefore, it is possible to reduce the weight of the sandwich structure 1 by the weight of previously required adhesive films or the weight of adhesive layers respectively superimposed on the conventional self-adhesive prepregs while the specific strength and specific rigidity of the prepreg 4A decrease due to the reduction in VF.

From the viewpoint of reducing the weight of the sandwich structure 1, it is appropriate to set the thickness of the self-adhesive prepreg 4A to 0.05 mm to 0.15 mm. That is, in order to reduce the weight of the sandwich structure 1, it is appropriate to set each the thicknesses of the prepregs 4A disposed on both sides of the honeycomb core 2 to 0.05 mm to 0.15 mm. One of the reasons is that an excessive thickness of the prepreg 4A causes a non-negligible increase in the weight of the thermosetting resin 6 due to the reduction in VF.

In particular, the technology for producing the prepreg 4A for the CFRP 3A as a thin layer material whose thickness is 0.05 mm to 0.15 mm has been established with the development of technology for opening the carbon fibers 5, and therefore thin layer materials can be easily manufactured and obtained, unlike prepregs for AFRP and prepregs for GFRP. When the prepreg 4A is a thin layer material having a thickness of 0.05 mm to 0.15 mm, the basis weight of the carbon fibers 5 included in the prepreg 4A is typically 50 g/m$^2$ to 100 g/m$^2$.

FIG. 2 is a perspective view showing a structural example of the honeycomb core 2 shown in FIG. 1.

As shown in FIG. 2, the honeycomb core 2 has a structure in which cells each consisting of a tube having a cross section of a regular hexagon are disposed without any gaps, and can also be bent. Therefore, the surface of the lower mold M is not limited to a flat surface, but may be a curved surface. The honeycomb core 2 is made of aluminum, Nomex (registered trademark), which is aramid paper impregnated with resin, or an FRP, such as CFRP or GFRP.

After the lamination of the two prepregs 4A and the honeycomb core 2 in process P1 is completed, the thermosetting resin 6 included in the prepregs 4A is heated and cured, and the prepregs 4A are bonded to the honeycomb core 2 by the curing of the thermosetting resin 6 in process P2. The prepregs 4A are heat-cured and bonded by heating the prepregs 4A in a low-pressure environment of 1 to 2 atmospheres so that the hollow honeycomb core 2 may not be crushed.

The pressure can be applied by bagging the honeycomb core 2 sandwiched between the prepregs 4A. More specifically, the honeycomb core 2 sandwiched between the prepregs 4A is covered with a bagging film B, and the space sealed by the lower mold M and the bagging film B is evacuated with a vacuum device V, whereby the differential pressure between the vacuum pressure and atmospheric pressure can be applied to the honeycomb core 2 sandwiched between the prepregs 4A.

Note that, subsidiary materials, such as an anti-adhesion film and a breather, may be disposed between the bagging film B and the prepreg 4A. The anti-adhesion film is a release film to prevent the bagging film B from adhering to the prepreg 4A and the cured CFRP 3A. As a specific example of the anti-adhesion film, an FEP (tetrafluoroethylene-hexafluoropropylene copolymer) film made of fluororesin is known. On the other hand, the breather is a sheet made of nonwoven polyester, nylon fibers or the like that is inserted mainly for the purpose of making it easier to remove air from within the area surrounded by the bagging film B. Accordingly, the breather is inserted between the anti-adhesion film and the bagging film B, for example.

As a heating device H for heating the prepregs 4A in a low pressure environment, an autoclave apparatus or an oven can be used. When an oven is used, it is necessary to give to each of the prepregs 4A properties required for a prepreg for out-of-autoclave (OoA). The prepreg for OoA has properties that the fibers can be impregnated with resin by applying a pressure equivalent to a differential pressure between vacuum pressure and atmospheric pressure, and then the resin can be heated and cured in an oven. Therefore, using prepregs for OoA allows molding an FRP in an inexpensive oven without using a large-scale and expensive autoclave apparatus.

When the prepregs 4A are heated by the heating device H to a temperature of about 80°C to 180°C, typically to about 120°C to 130°C, the uncured thermosetting resin 6 can be made fluid. As a result, the thermosetting resin 6 flows due to surface tension between the thermosetting resin 6 and the plates forming the cells of the honeycomb core 2, and thereby fillets 7 are formed as shown in process P2. That is, the end portions of the plate members forming the cells of the honeycomb core 2 are each sandwiched between the fillets 7 having smoothly curved surfaces.

When the prepregs 4A continue to be heated by the heating device H, the thermosetting resin 6 including the fillets 7 is cured. Specifically, the thermosetting resin 6 is heated and cured in a state where the thermosetting resin 6 is directly contacted with each side of the honeycomb core 2 without any other layer between the honeycomb core 2 and the thermosetting resin 6, which is the matrix of each of the prepregs 4A.

Therefore, the thermosetting resin 6 can be heated and cured with the fillets 7, each made of the thermosetting resin 6, formed on the honeycomb core 2 side of each of the prepregs 4A, and the cured thermosetting resin 6 can be directly bonded to the honeycomb core 2. Moreover, the two plies of the CFRP 3A can be molded by heating and curing the thermosetting resin 6 included in the prepregs 4A. That is, forming the fillets 7 allows ensuring the bonding strength between the honeycomb core 2 and each ply of the CFRP 3A.

If the fluidity of the thermosetting resin 6 is too high after the prepregs 4A are heated by the heating device H, the thermosetting resin 6 may flow downward due to gravity, and thereby non-uniform fillets 7 may be formed. Accordingly, it is appropriate to adjust the types and contents of the additives in the thermosetting resin 6 to make the viscosity of the thermosetting resin 6 appropriate after the fluidity is given to the thermosetting resin 6.

Next, in process P3, the sandwich structure 1 in which the honeycomb core 2 is sandwiched between the CFRP 3A plies is carried out from the heating device H, and then the jigs including the bagging film B and the lower mold M are removed. Thereby, a honeycomb sandwich structure in which the cured thermosetting resin 6 included in the CFRP 3A has been directly bonded to both sides of the honeycomb core 2 can be obtained as the sandwich structure 1.

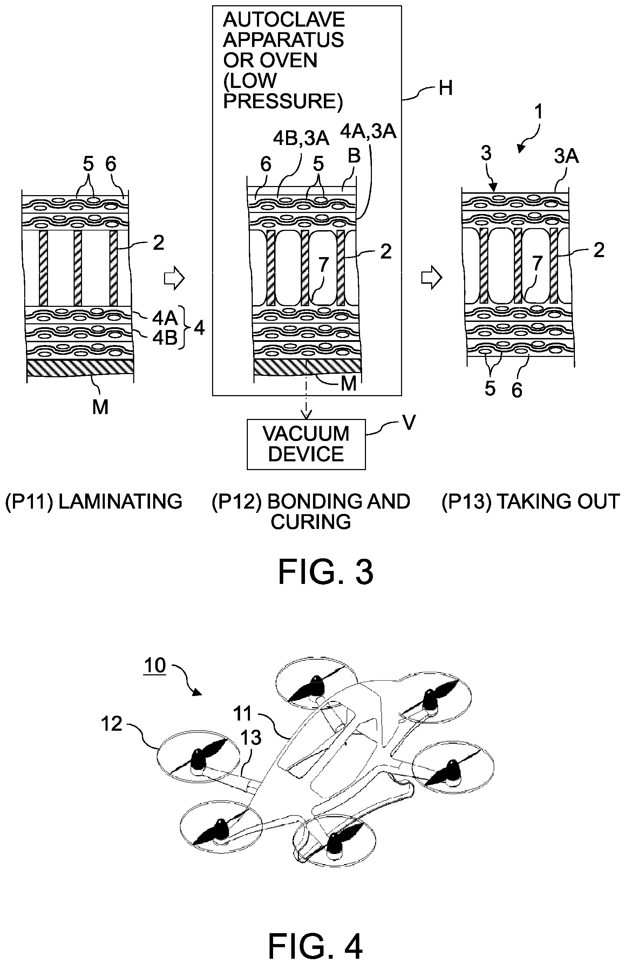

FIG. 3 is a view for explaining a modification of the method of producing a sandwich structure 1 according to the first embodiment of the present invention.

Each of the two skins 3 sandwiching the honeycomb core 2 is not limited to being made of a single ply of the CFRP 3A, but may be made of multiple plies of the CFRP 3A. Although FIG. 3 shows a method for producing the sandwich structure 1 in which the honeycomb core 2 is sandwiched between two sets of multiple plies of the CFRP 3A, it is also possible to produce the sandwich structure 1 in which the honeycomb core 2 is sandwiched between the skin 3 made of a single ply of the CFRP 3A and the skin 3 made of multiple plies of the CFRP 3A.

Also in a case where at least one of the skins 3 sandwiching the honeycomb core 2 is made of multiple plies of the CFRP 3A, the sandwich structure 1 can be produced in the same manner as in the method of producing the sandwich structure 1 in which each of the skins 3 sandwiching the honeycomb core 2 is made of a single ply of the CFRP 3A as shown in FIG. 1. Specifically, the sandwich structure 1 of which at least one of the skins 3 is made of multiple plies of the CFRP 3A can be produced through processes P11 to P13 as shown in FIG. 3. In process P11, the lower surface side prepreg 4 or the lower surface side prepregs 4, which have been given self-adhesiveness by reducing the VF (increasing the RC), the honeycomb core 2, and the upper surface side prepreg 4 or the upper surface side prepregs 4, which have been given self-adhesiveness by reducing the VF (increasing the RC), are laminated on the lower mold M. In process P12, the prepregs 4A on the upper and lower sides are heated under a low pressure environment so as not to crush the honeycomb core 2 so that the thermosetting resin 6 included in the prepregs 4A may be made fluid to form the fillets 7 and then the prepregs 4 are cured. In process P13, the sandwich structure 1 in which the honeycomb core 2 is sandwiched between the cured CFRP 3A is taken out.

Also in a case where at least one of the skins 3 sandwiching the honeycomb core 2 is made of multiple plies of the CFRP 3A, no adhesive film is used since the thermosetting resin 6 that forms the matrix of the prepregs 4A whose VF is reduced down to the range of not less than 20 volume% and not more than 40 volume% while RC is increased up to the range of not less than 50 mass% and not more than 70 mass% partially functions as adhesives with the honeycomb core 2. In addition, setting the thickness of each of the one or more prepregs 4 disposed on each side of the honeycomb core 2 to 0.05 mm to 0.15 mm allows reducing the weight of the sandwich structure 1 even when the VF of the prepregs 4 is reduced while the RC is increased.

Even when the thickness of the prepreg 4 itself is thin, the thickness and weight of the skin 3 increase as long as the lamination number of the prepregs 4 is increased. Accordingly, it is appropriate to make the thickness of the skin 3, obtained by thermally curing the one or more prepregs 4 placed on each side of the honeycomb core 2, less than 1 mm so that the weight reduction effect corresponding to an adhesive layer, such as an adhesive film, may become significant, from the viewpoint of obtaining the weight reduction effect of the sandwich structure 1.

In a case where at least one of the skins 3 sandwiching the honeycomb core 2 is made of multiple plies of the CFRP 3A, only the two prepregs 4A adjacent to the honeycomb core 2 form the fillets 7 and are bonded to the honeycomb core 2. For this reason, only the prepregs 4A including the thermosetting resin 6 that are in direct contact with the honeycomb core 2 may be self-adhesive prepregs each having a VF of 20 volume% to 40 volume% and an RC of 50 mass% to 70 mass% while the other prepreg 4B or prepregs 4B including the thermosetting resin 6 that are not in direct contact with the honeycomb core 2 may be conventional prepregs each having a VF of 40 volume% to 60 volume% and an RC of 30 mass% to 50 mass%.

That is, the prepreg 4B including the uncured thermosetting resin 6 that is not in direct contact with the honeycomb core 2 may be a conventional non-self-adhesive prepreg having a VF of more than 40 volume% and not more than 60 volume% (an RC of not less than 30 mass% and less than 50 mass%).

In this case, the weight of the sandwich structure 1 can be reduced since the amount of the thermosetting resin 6 can be reduced although it is necessary to prepare two types of the prepregs 4A and 4B having different VF and RC. Conversely, when the VF and RC of the prepregs 4A and 4B are the same, the sandwich structure 1 in which the honeycomb core 2 is sandwiched between the skins 3 each having a desired thickness can be produced by laminating one type of prepregs. Therefore, in case of laminating prepreg tapes using an automated fiber placement (AFP) apparatus, the configuration of the lamination head of the AFP apparatus can be simplified.

Between the two prepregs 4A, which are in direct contact with the honeycomb core 2, and the one or more prepregs 4B, which are not in direct contact with the honeycomb core 2, not only the VF and RC but also the thicknesses may be different from each other. For example, the prepregs 4A that are in direct contact with the honeycomb core 2 may be thin layers each having a thickness of 0.05 mm to 0.15 mm while all or a part of the prepregs 4B that are not in direct contact with the honeycomb core 2 may be thick layers each having a thickness of 0.15 mm to 0.25 mm. A typical fiber basis weight of the thin layer having a thickness of 0.05 mm to 0.15 mm is 50 g/m$^2$ to 100 g/m$^2$ as mentioned above. On the other hand, a typical fiber basis weight of the thick layer having a thickness of 0.15 mm to 0.25 mm is 150 g/m$^2$ to 250 g/m$^2$.

Note that, it is considered that a thick prepreg having a thickness of 0.15 mm to 0.25 mm is used in combination with thin prepregs having a thickness of 0.05 mm to 0.15 mm in order to produce the small sandwich structure 1 in most cases although the thicknesses of standard commercially available prepreg tapes are 0.2 mm to 0.8 mm and therefore prepregs having thicknesses of more than 0.25 mm are available.

As a specific example, end portions of the honeycomb core 2 may be chamfered. In this case, it is often necessary to make each of portions of the skin 3 covering the C-chamfered portions thicker than the other portion. In such a case, the thickness of the skin 3 can be ensured by increasing the lamination number and/or thickness of the prepregs 4B that are not in direct contact with the honeycomb core 2.

(Sandwich structure)

When the sandwich structure 1 is produced by the producing method shown in FIG. 1 or FIG. 3, the sandwich structure 1 having the structure in which the honeycomb core 2 is sandwiched between plies of the CFRP 3A so that at least one ply of the CFRP 3A may lie on each side of the honeycomb core 2 is obtained as shown in process P3 or process P13. Specifically, the sandwich structure 1 in which the thermosetting resin 6 has been directly bonded to the honeycomb core 2 with the fillets 7 made of the thermosetting resin 6 formed on the honeycomb core 2 sides of the CFRP 3A without any other layer being interposed between the honeycomb core 2 and the thermosetting resin 6 which is the matrix reinforced with the carbon fibers 5 included in the CFRP 3A is obtained.

Moreover, at least the plies of the CFRP 3A including the thermosetting resin 6 in direct contact with both sides of the honeycomb core 2 are layers derived by thermally curing the prepregs 4A whose VF is reduced down to a range of not less than 20 volume% and not more than 40 volume% while RC is increased up to a range of not less than 50 mass% and not more than 70 mass%. That is, the content of the thermosetting resin 6 is higher than the typical content, and conversely, the content of the carbon fibers 5 is lower than the typical content. Therefore, the sandwich structure 1 whose VF of the CFRP 3A plies including the thermosetting resin 6 in direct contact with both sides of the honeycomb core 2 is not less than 20 volume% and not more than 40 volume% is obtained, assuming that influences of resin flow, voids and the like, which may arise during thermally curing the thermosetting resin 6, are negligible.

Similarly, when the prepregs 4A whose VF is not less than 20 volume% and not more than 35 volume% (RC is not less than 55 mass% and not more than 70 mass%) are cured to mold the CFRP 3A plies, the VF of the CFRP 3A plies is not less than 20 volume% and not more than 35 volume%. On the other hand, when the prepregs 4A whose VF is not less than 20 volume% and not more than 30 volume% (RC is not less than 60 mass% and not more than 70 mass%) are cured to mold the CFRP 3A plies, the VF of the CFRP 3A plies is not less than 20 volume% and not more than 30 volume%.

At least the CFRP 3A plies respectively disposed adjacent to both sides of the honeycomb core 2 each has a thickness of 0.05 mm to 0.15 mm. When the prepregs 4B shown in FIG. 3 that are not in direct contact with the honeycomb core 2 are also thin plies each having a thickness of 0.05 mm to 0.15 mm similar to the prepregs 4A in direct contact with both sides of the honeycomb core 2 respectively, the sandwich structure 1 in which the one or more CFRP 3A plies disposed on each side of the honeycomb core 2 each has a thickness of 0.05 mm to 0.15 mm is obtained.

Moreover, the skin 3 made of the one or more CFRP 3A plies disposed on each side of the honeycomb core 2 has a plate thickness of less than 1 mm. Note that, the thickness of the entire sandwich structure 1 including the honeycomb core 2 and the skins 3 is about 2 mm to 25.4 mm.

(Aircraft)

FIG. 4 is a perspective view showing an example of an aircraft 10 including structural materials consisting of the sandwich structures 1 each produced by the method shown in FIG. 1 or 3.

FIG. 4 shows an example of a case where the aircraft 10 including the sandwich structures 1 as structural materials is an air mobility having a fuselage 11 and rotors 12 mounted on the fuselage 11. In case of the small aircraft 10 typified by an air mobility, the sandwich structure 1 including the skins 3 whose thicknesses are each less than 1 mm can be used as at least one of structural materials since the weight of the aircraft 10 is small compared to a large fixed-wing aircraft, such as a passenger plane.

Examples of an air mobility include not only an electric aircraft, typified by an electric vertical take-off and landing aircraft (eVTOL) and an electric short take-off and landing aircraft (eSTOL), but also a rotorcraft, such as a helicopter and a multicopter. Among air mobility, an unmanned aerial vehicle (UAV), such as a helicopter and a multicopter, is sometimes called a drone while a manned aircraft consisting of a multicopter is called a flying car.

In a case where the rotors 12 are coupled to the fuselage 11 by arms 13 respectively as exemplified by FIG. 4, the arms 13 can be made of the sandwich structures 1 respectively. As a matter of course, the sandwich structure 1 may also be used as a structural member for another portion.

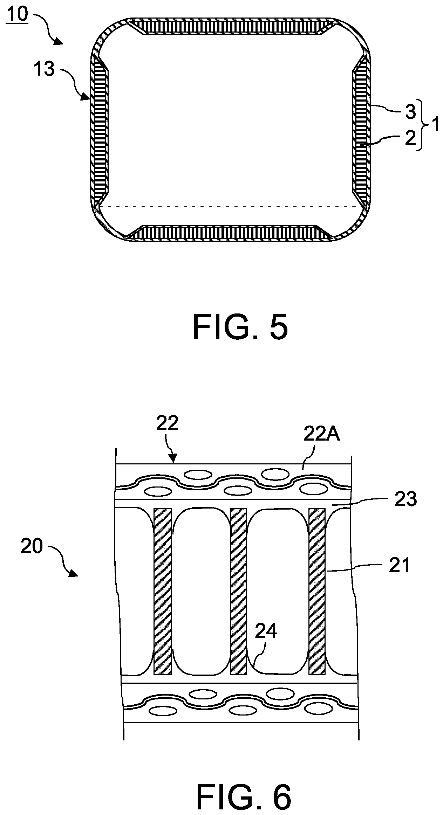

FIG. 5 is a cross-sectional view of one of the arms 13 of the aircraft 10 shown in FIG. 4.

As exemplified by FIG. 5, a skin itself of each of the hollow pipe-shaped arms 13 can be made of the sandwich structure 1. As shown in FIG. 5, the sandwich structure 1 in which a plurality of the honeycomb cores 2 are sandwiched between the common skins 3 may also be produced. In this case, the surface of the lower mold M does not need to be flat, and can be formed into a desired shape. Alternatively, a plurality of the sandwich structures 1 may be produced and then bonded to each other.

The space inside each of the arms 13 can be used for laying electric wires and the like. In addition, at least one stringer may be fixed to the inside or outside of each of the arms 13, and/or a part of the skin of each of the arms 13 may not be the sandwich structure 1 but be a simple panel or a panel reinforced with at least one stringer, as described in Japanese Patent Application Publication JP 2024-67864A.

(Effects)

As described above, in the sandwich structure 1, the method of producing the sandwich structure 1 and the aircraft 10, the honeycomb core 2 is sandwiched between the CFRP 3A plies, which can be easily produced and obtained as thin plies, and the prepregs 4A are directly bonded to the honeycomb core 2 with practical adhesion force without adhesive films or adhesive layers by reducing the VF of the prepregs 4A for the CFRP 3A plies and increasing the RC thereof. Therefore, according to the sandwich structure 1, the method of producing the sandwich structure 1 and the aircraft 10, further weight reduction can be achieved particularly when the thin prepregs 4 each having a thickness of 0.05 mm to 0.15 mm are used as the material for the skins 3.

FIG. 6 is a sectional view of a conventional honeycomb sandwich structure 20.

When the conventional honeycomb sandwich structure 20 is composed of a honeycomb core 21 and skins 22 each made of CFRP 22A, and the skins 22 are bonded to the honeycomb core 21 with strong adhesive strength, the CFRP 22A plies are bonded to the honeycomb core 21 using an adhesive 23. Specifically, an adhesive film are placed between the honeycomb core 21 and each of prepregs for the conventional CFRP 22A plies each having insufficient adhesion to the honeycomb core 21 prior to heating and curing the prepregs. In this case, fillets 24 are formed by the adhesive 23. Therefore, it is essential to use adhesive films having excellent adhesion to the honeycomb core 21.

Although there are conventional prepregs for the CFRP22A that are sold as having self-adhesive property, none actually has sufficient adhesion to the honeycomb core 21, and it has not yet become possible to omit adhesive films or layers replacing adhesive films. This is thought to be because the conventional prepregs for the CFRP 22A do not contain enough resin to form the fillets 24 although it is essential to form the fillets 24 to bond the CFRP 22A pies to the honeycomb core 21.

Even if it were possible to directly bond the CFRP 22A plies to the honeycomb core 21 using the conventional prepregs, the amount of resin contained in the conventional prepregs does not take into account adhesion to the honeycomb core 21, resulting in a problem of resin loss in the skins 22. That is, the resin that should be used to form the skins 22 is used to form the fillets 24, which leads to deterioration in the quality of the skins 22.

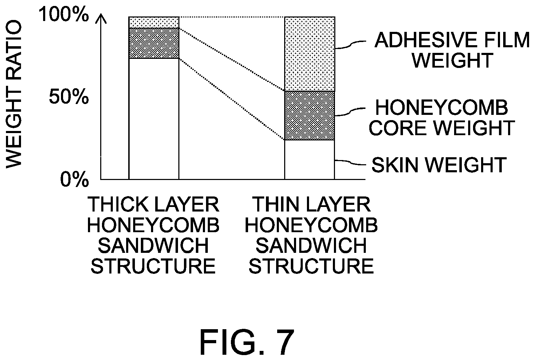

FIG. 7 is a graph for explaining a problem of the conventional honeycomb sandwich structure 20.

The vertical axis of the bar graphs shown in FIG. 7 indicates the weight ratio (%) of each material contained in the conventional honeycomb sandwich structures 20. The typical weight per square meter of adhesive films used in the conventional honeycomb sandwich structure 20 is 300 $g/m^2$ to 400 $g/m^2$. In a case of the conventional thick layer honeycomb sandwich structure 20 produced as a structural member for a large aircraft, such as a passenger plane, by laminating a large number of prepregs consisting of thick plies, the weight ratio of adhesive films is small and does not pose a problem as shown in the bar graph on the left.

As a specific example, in a case of the thick layer honeycomb sandwich structure 20 in which the honeycomb core 21 having a density of 80 $kg/m^3$ and a thickness of 20 mm is sandwiched between the two skins 22 consisting of CFRP plies each having a density of 1.6 $g/cm^3$ and a plate thickness of 2 mm, and the skins 22 are respectively bonded to both sides of the honeycomb core 21 with adhesive films each having a weight per square meter of 300 $g/m^2$, the weight per square meter Ws_thick of the skins 22 is given by formula (1-1), the weight per square meter Wh_thick of the honeycomb core 21 is given by formula (1-2), and the weight per square meter Wa_thick of the adhesive films is given by formula (1-3).

$$Ws\_thick = 100{\times}100{\times}0.2{\times}1.6{\times}2 = 6400 \text{ g/m}^2 \qquad \text{Formula (1-1)}$$

$$Wh\_thick = 80{\times}1000/100{\times}2 = 1600 \text{ g/m}^2 \qquad \text{Formula (1-2)}$$

$$Wa\_thick = 300{\times}2 = 600 \text{ g/m}^2 \qquad \text{Formula (1-3)}$$

In this case, the weight ratio Ra_thick of the adhesive films is a small value as shown in formula (1-4), and the weight of the adhesive films does not account for a large proportion.

$$Ra\_thick = 600/(6400+1600+600) = 7 \text{ \%} \qquad \text{Formula (1-4)}$$

In contrast, in a case of the honeycomb sandwich structure 20 for a small aircraft, such as an air mobility, it is possible to use the skins 22 each obtained by thermally curing one to fifteen plies of thin prepregs each having a thickness of 0.05 mm to 0.15 mm. In such a case of the thin layer honeycomb sandwich structure 20 having the light and thin skins 22, the weight ratio of the adhesive films becomes large and is not negligible as shown by the bar graph on the right.

As a specific example, in a case of the thin layer honeycomb sandwich structure 20 in which the honeycomb core 21 having a density of 80 $kg/m^3$ and a thickness of 5 mm is sandwiched between the two skins 22 consisting of CFRP plies each having a density of 1.6 $g/cm^3$ and a plate thickness of 0.1 mm, and the skins 22 are respectively bonded to both sides of the honeycomb core 21 with adhesive films each having a weight per square meter of 300 $g/m^2$, the weight per square meter Ws_thin of the skins 22 is given by formula (2-1), the weight per square meter Wh_thin of the honeycomb core 21 is given by formula (2-2), and the weight per square meter Wa_thin of the adhesive films is given by formula (2-3).

$$Ws\_thin = 100 \times 100 \times 0.01 \times 1.6 \times 2 = 320 \text{ g/m}^2 \qquad \text{Formula (2-1)}$$

$$Wh\_thin = 80 \times 1000/100/2 = 400 \text{ g/m}^2 \qquad \text{Formula (2-2)}$$

$$Wa\_thin = 300 \times 2 = 600 \text{ g/m}^2 \qquad \text{Formula (2-3)}$$

In this case, the weight ratio Ra_thin of the adhesive films becomes a large value as shown in formula (2-4), and the weight of the adhesive films accounts for a large proportion. Specifically, nearly half of the weight of the thin layer honeycomb sandwich structure 20 is accounted for by the adhesive.

$$Ra\_thin = 600/(320+400+600) = 45 \text{ \%} \qquad \text{Formula (2-4)}$$

Each adhesive film is not a structural member providing strength and rigidity like the CFRP plies and the honeycomb core 21. Therefore, the reduction in weight of the adhesive films allows the weight of the thin layer honeycomb sandwich structure 20 to be reduced.

Accordingly, in a case of the thin layer honeycomb sandwich structure 1, the prepregs 4A can be given self-adhesiveness sufficient for bonding the prepregs 4A to the honeycomb core 2 by reducing the VF of the prepregs 4A and increasing the RC of the prepregs 4A as explained with reference to FIG. 1 and FIG. 3 while mechanical properties including specific strength and specific rigidity of the prepregs 4A are sacrificed to some extent. As a result, the adhesive films become unnecessary, and the weight of the thin layer honeycomb sandwich structure can be reduced. That is, the method of producing the sandwich structure 1 described with reference to FIG. 1 and FIG. 3 makes it possible to obtain the lightest possible sandwich structure 1 by eliminating the need for adhesive films in case of using the prepregs 4 consisting of thin ply materials each having a thickness of 0.05 mm to 0.15 mm.

Accordingly, adopting the method of producing the sandwich structure 1 described with reference to FIG. 1 and FIG. 3 can attain a weight reduction effect for the sandwich structure 1 when the sandwich structure 1 is a thin layer honeycomb sandwich structure in which the plate thicknesses of the skins 3 are each less than 1 mm, as described above.

The above-mentioned thin layer honeycomb sandwich structure can be used as a structural member of the small aircraft 10 typified by an air mobility, such as a drone or a flying car. In particular, in a case of a secondary structure, such as a fairing, to which a relatively small load is applied, each of the skins 3 of the sandwich structure 1 having the required strength can often be produced simply by heating and curing one ply of the thin prepreg 4A. When the aircraft 10 has a size similar to that of a drone, the sandwich structure 1 can also be used as a main structural member. Therefore, when the sandwich structures 1 are used as structural members, it is expected that the weight of the small aircraft 10 can be dramatically reduced.

On the other hand, the previously required preparation and placement of adhesive films can be omitted although the weight reduction effect of the sandwich structure 1 decreases as the lamination number of the prepregs 4B, of which the VF is reduced while the RC is increased, increases since the weight of the thermosetting resin 6 increases. Accordingly, even when the plate thickness of the skin 3 exceeds 1 mm, there is an advantage in that the manufacturing cost of the sandwich structure 1 can be reduced. This also applies when at least one of the prepregs 4, 4A and 4B having the reduced VF and the increased RC is a thick ply material.

(Second embodiment)

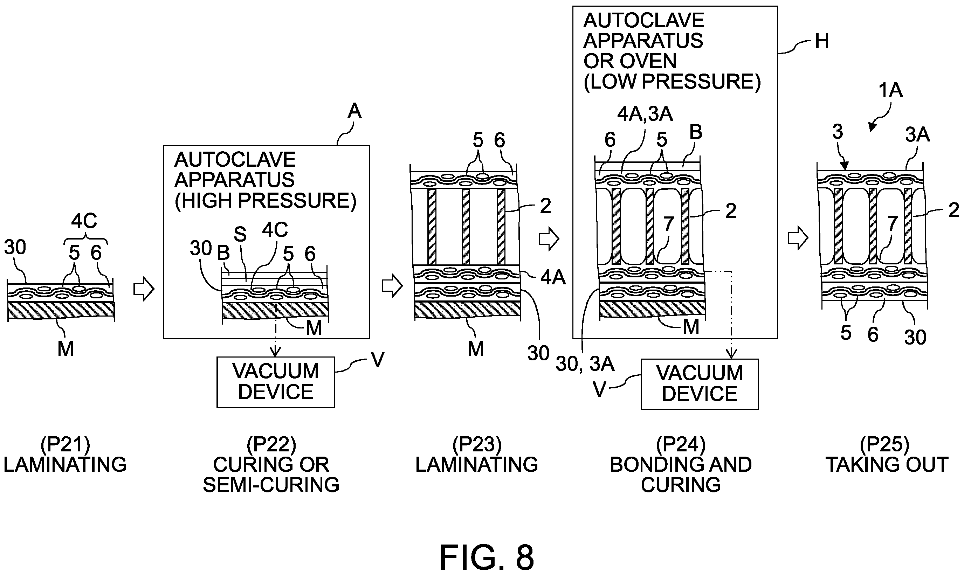

FIG. 8 is a view for explaining a method of producing a sandwich structure 1A according to the second embodiment of the present invention.

The method of producing the sandwich structure 1A in the second embodiment shown in FIG. 8 differs from the method of producing the sandwich structure 1 in the first embodiment in that one prepreg 4C forming a surface layer 30 of the skin 3 is first cured or semi-cured, and then the two prepregs 4A sandwiching the honeycomb core 2 are cured. The other details of the method of producing the sandwich structure 1A in the second embodiment are not substantially different from those of the method of producing the sandwich structure 1 in the first embodiment. Therefore, the same elements and the corresponding elements are denoted with the same reference signs, and their descriptions are omitted.

In the method of producing the sandwich structure 1A shown in FIG. 8, a sheet of the prepreg 4C which is the material for the CFRP 3A ply forming one surface of the sandwich structure 1A without being in direct contact with the honeycomb core 2 is placed on a rigid lower mold M, in process P21. When the sandwich structure 1A is used as a material for a skin panel, it is appropriate that the prepreg 4C which is the material for the CFRP 3A ply forming the outer surface of the skin panel is placed on the lower mold M.

Next, in process P22, the prepreg 4C placed on the lower mold M is heated under a high pressure environment of 3 to 8 atmospheres, thereby curing or semi-curing the prepreg 4C forming the surface layer 30. Note that, the semi-curing of the prepreg 4C is a heat treatment by which the viscosity of the prepreg 4C is reduced to a level where the shape of the prepreg 4C is not easily deformed but the prepreg 4C is not cured to a completely solid state.

The pressurization and heating of the prepreg 4C can be performed by bagging the prepreg 4C and using an autoclave apparatus A. The bagging of the prepreg 4C is carried out by covering the prepreg 4C with a bagging film B and evacuating the space sealed by the lower mold M and the bagging film B with a vacuum device V.

In addition, in order to prevent the prepreg 4C from adhering to the bagging film B when the prepreg 4C is heated under the high pressure environment, a sheet S that enables the bagging film B to be easily peeled off after the prepreg 4C is cured or semi-cured is placed between the bagging film B and the prepreg 4C.

It is necessary to laminate another prepreg 4A on the prepreg 4C in order to sandwich the honeycomb core 2, in the next process P23. When it is planned to laminate another uncured prepreg after curing a prepreg, a peel ply is generally disposed between a bagging film and the prepreg to be cured first. The peel ply is often made of polyester, which has the property of absorbing resin. Therefore, when the peel ply is peeled off after the prepreg is cured, the effect of sanding the cured prepreg is obtained. As a result, the surface of the cured prepreg is activated, and the adhesion between the cured prepreg and the other uncured prepreg can be improved.

Nevertheless, when the prepreg 4C is a thin layer material having a thickness of 0.05 mm to 0.15 mm, the prepreg 4C cannot withstand the pressure applied when the peel ply is peeled off. That is, if a thin layer material having a thickness of 0.05 mm to 0.15 mm is covered with the peel ply and then an attempt is made to peel off the peel ply after the thin layer material is cured, the thin layer material may be damaged.

Therefore, it is appropriate to use a release film that can be easily peeled off as the sheet S to be placed between the bagging film B and the prepreg 4C. As described above, the release film is an adhesion preventing film mainly made of fluororesin. That is, it is appropriate to use an adhesion preventing release film as the sheet S for preventing the prepreg 4C from adhering to the bagging film B.

When the prepreg 4C is carried into the autoclave apparatus A in a bagged state and then pressure is applied to the prepreg 4C in the autoclave apparatus A, the differential pressure between the vacuum pressure and the pressure in the autoclave apparatus A can be applied to the prepreg 4C. In addition, heating the prepreg 4C to a curing temperature or semi-curing temperature in the autoclave apparatus A allows the prepreg 4C to be cured or semi-cured. That is, heating the prepreg 4C under a pressure of 3 to 8 atmospheres using the autoclave apparatus A makes it possible to first cure or semi-cure only the surface layer 30 of the skin 3.

Next, in process P23, the honeycomb core 2 is placed directly on the cured or semi-cured surface layer 30 in a state where the honeycomb core 2 has been sandwiched between the prepregs 4A each having the VF reduced down to the range of not less than 20 volume% and not more than 40 volume%, and the RC increased up to the range of not less than 50 mass% and not more than 70 mass%. That is, no other layer is disposed between the surface layer 30 and the lower prepreg 4A. In addition, the honeycomb core 2 sandwiched between the two prepregs 4A is placed directly on the surface layer 30 in a state where the uncured thermosetting resin 6 included in the two prepregs 4A sandwiching the honeycomb core 2 is in direct contact with the honeycomb core 2 as described in the first embodiment. For example, the lower prepreg 4A, the honeycomb core 2 and the upper prepreg 4A can be laminated in this order.

After the surface layer 30 has been cured or semi-cured while covering the surface layer 30 with the release film and then the release film has been peeled off, the prepreg 4A, which has been given self-adhesiveness by reducing the VF and increasing the RC, comes into direct contact with the surface layer 30 although the surface of the surface layer 30 is not activated as it is after a peel ply is peeled off. Therefore, it is possible to make the prepreg 4A adhere to the surface layer 30 without an adhesive film or another layer for improving adhesion.

Next, in process P24, adhesion between the surface layer 30 and the lower prepreg 4A sandwiching the honeycomb core 2, adhesion between the honeycomb core 2 and each of the prepregs 4A by forming the fillets 7, and curing the uncured prepregs 4A are performed by heating them in a low pressure environment of 1 to 2 atmospheres so as not to crush the honeycomb core 2.

That is, the uncured thermosetting resin 6 included in the two prepregs 4A sandwiching the honeycomb core 2 is heated and cured in a state where the uncured thermosetting resin 6 included in each of the two prepregs 4A is brought into direct contact with the honeycomb core 2 without any other layer interposed between the honeycomb core 2 and the thermosetting resin 6 included in each of the two prepregs 4A. In addition, the uncured thermosetting resin 6 included in the lower prepreg 4A sandwiching the honeycomb core 2 is heated and cured in a state where the uncured thermosetting resin 6 included in the lower prepreg 4A is brought into direct contact with the surface layer 30 without any other layer interposed between the surface layer 30 and the uncured thermosetting resin 6 included in the lower prepreg 4A.

When the surface layer 30 was not cured completely but semi-cured in process P22, not only the uncured thermosetting resin 6 disposed on the surface layer 30 but also the surface layer 30 is thermally cured. That is, when the surface layer 30 includes the thermosetting resin 6 that has not been completely cured, the thermosetting resin 6 included in the surface layer 30 is also thermally cured.

As a heating device H for heating and curing the uncured thermosetting resin 6 under a pressure of 1 to 2 atmospheres, an autoclave apparatus or an oven can be used similar to the first embodiment. Furthermore, using an oven and prepregs for OoA as the prepregs 4A leads to a reduction in the manufacturing cost of the sandwich structure 1A as described in the first embodiment.

When the bonding and curing in process P24 is completed, the sandwich structure 1A including the cured surface layer 30 as part of the skin 3 can be carried out from the equipment and jig, in process P25. The skin 3 consisting of the two plies of the CFRP 3A including the surface layer 30 cured under the high pressure can be used as the outer surface side of the panel consisting of the sandwich structure 1A while the skin 3 consisting of the one ply of the CFRP 3A cured under the low pressure can be used as the inner surface side of the panel consisting of the sandwich structure 1A.

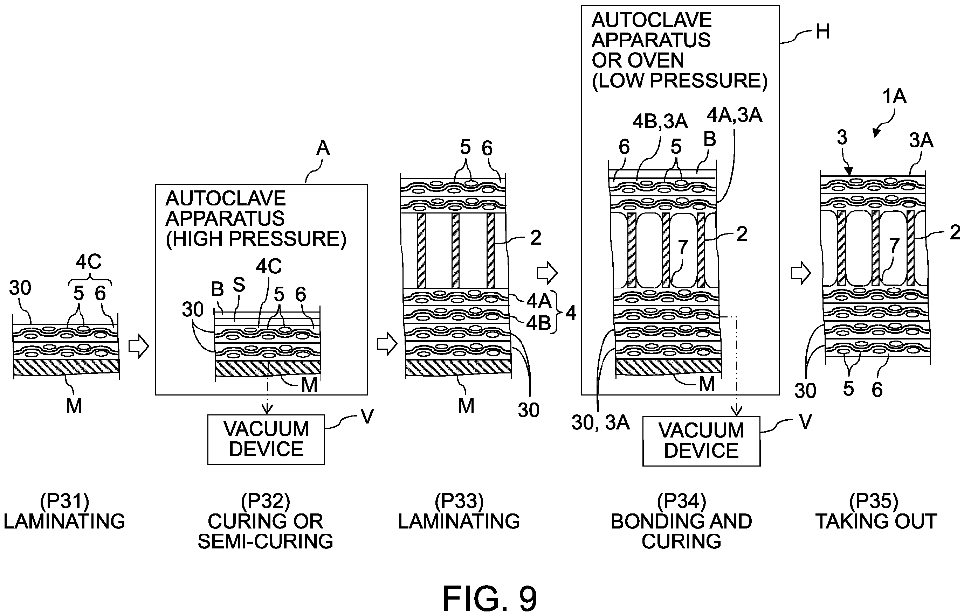

FIG. 9 is a view for explaining a modification of the method of producing a sandwich structure 1A according to the second embodiment of the present invention.

As shown in FIG. 9, the surface layer 30 first cured or semi-cured under the high pressure may consist of the two or more prepregs 4C and the two or more plies of the CFRP 3A although the surface layer 30 consists of the single prepreg 4C and the one ply of the CFRP 3A in the example shown in FIG. 8. For example, the surface layer 30 may be formed by curing the two or three prepregs 4C.

Furthermore, the two or more prepregs 4 to be cured under the low pressure at the second time for sandwiching the honeycomb core 2 may be disposed on one side or each side of the honeycomb core 2 as shown in FIG. 9. That is, after the surface layer 30 is cured or semi-cured in the autoclave apparatus A, the prepregs 4A that come into direct contact with the honeycomb core 2 and the one or more prepregs 4B that do not come into direct contact with the honeycomb core 2 may be cured under the low pressure with the heating device H.

When the surface layer 30 is made of the two or more plies of the CFRP 3A, the two or more prepregs 4C, including the prepreg 4C that forms the surface of the sandwich structure 1A, are laminated on the lower mold M in process P31. Then, in process P32, a laminate of the prepregs 4C is heated under a pressure of 3 to 8 atmospheres using the autoclave apparatus A. As a result, the surface layer 30 consisting of the two or more plies is cured or semi-cured.

After that, the two or more prepregs 4 may be laminated between the honeycomb core 2 and the surface layer 30, in process P33. That is, the honeycomb core 2 sandwiched between the two prepregs 4A may be disposed on the cured or semi-cured surface layer 30 with the other at least one prepreg 4B interposed therebetween.

Next, in process P34, the uncured thermosetting resin 6 included in all of the prepregs 4 can be heated and cured in a state in which the uncured thermosetting resin 6 included in the prepreg 4B adjacent to the surface layer 30 in the thickness direction is in direct contact with the surface layer 30 without any other layer being interposed between the surface layer 30 and the uncured thermosetting resin 6 included in the prepreg 4B adjacent to the surface layer 30 in the thickness direction. This makes it possible to produce the sandwich structure 1A in which both sides of the honeycomb core 2 are sandwiched between the skins 3 each made of the two or more plies of the CFRP 3A, as shown in process P35.

Note that, increasing the number of the prepregs 4C forming the surface layer 30 can improve the strength of the surface layer 30. When the strength of the surface layer 30 can be sufficiently ensured, it is possible to use a peel ply instead of a release film as the sheet S disposed between the bagging film B and the prepreg 4C. After the surface layer 30 consisting of the two or more plies is cured or semi-cured while covered with the peel ply, the face of the surface layer 30 from which the peel ply is peeled off is in an activated state. Accordingly, using a peel ply as the sheet S can improve the adhesiveness of the surface layer 30 compared to using a release film.

Therefore, in case of using a peel ply as the sheet S, it is not necessarily required to reduce the VF (increase the RC) of the prepreg 4B to be in contact with the surface layer 30 after the peel ply is peeled off to give self-adhesion to the prepreg 4B. Nevertheless, it is preferable to reduce the VF (increase the RC) of at least the prepreg 4B that is in direct contact with the surface layer 30 to give self-adhesion, similar to the prepreg 4A that is in direct contact with the honeycomb core 2, from the standpoint of obtaining even better adhesion of the prepreg 4B to the surface layer 30 after the peel ply is peeled off.

On the other hand, when a release film is used as the sheet S, it is appropriate to reduce the VF (increase the RC) of the prepreg 4B that is in direct contact with the surface layer 30 to give self-adhesiveness. That is, as the prepreg 4B that comes into direct contact with the surface layer 30, it is appropriate to use a prepreg that has been given self-adhesiveness by reducing the VF and increasing the RC, similar to the prepreg 4A that comes into direct contact with the honeycomb core 2.

(Effects)

In the second embodiment described above, only the surface layer 30 of the sandwich structure 1A is first cured or semi-cured under a high pressure. Therefore, the appearance of the sandwich structure 1A can be improved.

When the prepreg for forming the skin 22 in the conventional honeycomb sandwich structure 20 described with reference to FIG. 6 is made of a thin layer material, there is also a problem in appearance that traces of the honeycomb core 21 are visible on the surface of the honeycomb sandwich structure 20, in addition to the problem that the weight of the adhesive films is not negligible.

This is because the pressure applied at the time of heating and curing the prepreg is transmitted to the prepreg from the plates that make up the hexagonal cells of the honeycomb core 21 while the pressure is not transmitted to the prepreg from the hollow portions of the cells. That is, the prepreg to which the pressure is transmitted from the honeycomb core 21 cannot be pressed uniformly against a lower mold, resulting in slight irregularities on the surface of the cured skin 22, which impairs the appearance.

In addition, there is also a problem in appearance that the resin flows toward the honeycomb core 21 during heating and curing the prepreg, and thereby countless resin defects may appear on the outer surface of the cured skin 22.

In contrast, according to the second embodiment, the above-mentioned appearance defects can be avoided since only the surface layer 30 of the skin 3 is cured or semi-cured first under a high pressure without being brought into contact with the honeycomb core 2. As a result, a satisfactory appearance can be kept even when the skin 3 is thin, such as 1 mm or less. That is, a thin layer sandwich structure can be produced with a high cosmetic property.

Note that, the thermosetting resin 6 included in the one or more prepregs 4C forming the surface layer 30 does not function as an adhesive between the prepregs 4 adjacent to each other, and is not used to form the fillets 7 for bonding the prepregs 4 to the honeycomb core 2. Accordingly, it is not essential to use a prepreg having self-adhesiveness by reducing the VF and increasing the RC as the prepreg 4C forming the surface layer 30. Nevertheless, using a prepreg having the reduced VF and increased RC can attain the effect of reducing resin defects that often arise at portions where the carbon fibers 5 cross with each other, and therefore leads to an improved appearance of the sandwich structure 1A.

(Third embodiment)

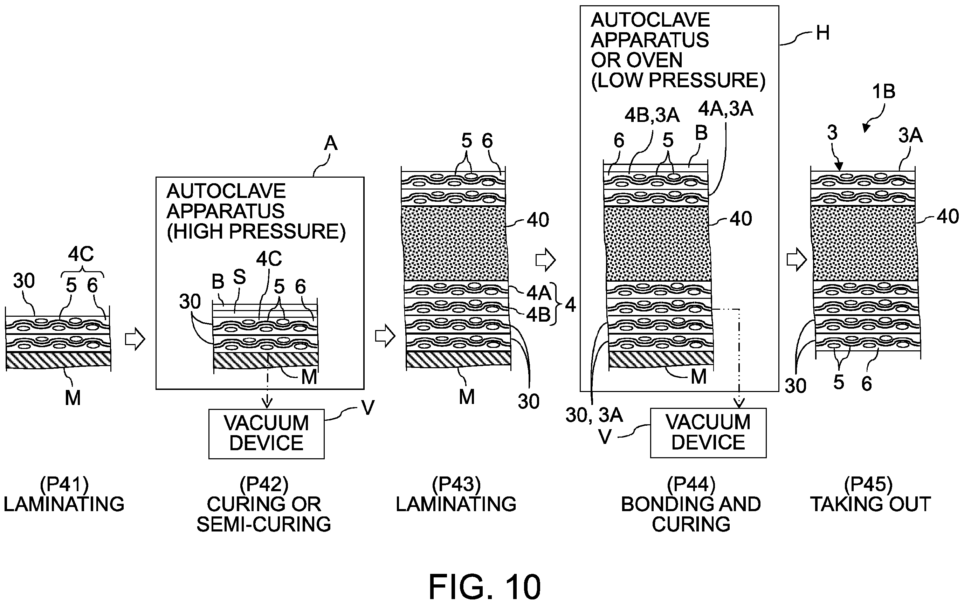

FIG. 10 is a view for explaining a method of producing a sandwich structure 1B according to the third embodiment of the present invention.

The method of producing the sandwich structure 1B in the third embodiment shown in FIG. 10 differs from each of the method of producing the sandwich structure 1 in the first embodiment and the method of producing the sandwich structure 1A in the second embodiment in that the core material sandwiched between the skins 3 each made of a single ply or plies of the CFRP 3A is a foam core 40 instead of the honeycomb core 2. The other details of the method of producing the sandwich structure 1B in the third embodiment are not substantially different from those of each of the method of producing the sandwich structure 1 in the first embodiment and the method of producing the sandwich structure 1A in the second embodiment. Therefore, the same elements and the corresponding elements are denoted with the same reference signs, and their descriptions are omitted.

As exemplified by FIG. 10, the core material sandwiched between the skins 3 each made of the CFRP 3A is not limited to the honeycomb core 2 but may be the foam core 40. The foam core 40 is made of a foam used as a core material of the sandwich structure 1B. Although specific examples of the material of the foam core 40 include a PMI (polymethacrylimide) based foam, a foam made of a desired material may be used.

The sandwich structure 1B in which the foam core 40 is sandwiched between the plies of the CFRP 3A so that at least one ply of the CFRP 3A may lie on each side of the foam core 40 can also be produced by processes similar to processes shown in FIG. 1, FIG. 3, FIG. 8 or FIG. 9. When the surface layer 30 consisting of the two or more prepregs 4C is cured first, the sandwich structure 1B can be produced as shown in FIG. 10. Specifically, in process P41, the surface layer 30 is laminated. In process P42, the surface layer 30 is cured or semi-cured under a high pressure. In process P43, the foam core 40 together with the prepregs 4A and 4B that sandwich the foam core 40 are additionally laminated. In process P44, the foam core 40 is bonded to the prepregs 4A, and the prepregs 4A and 4B that sandwich the foam core 40 as well as the prepregs 4C included in the surface layer 30 in case of semi-curing the surface layer 30 are cured. In process P45, the sandwich structure 1B in which the foam core 40 is sandwiched between the plies of the CFRP 3A is carried out.

When the core material is the foam core 40, the fillets 7 to be formed if the core material is the honeycomb core 2 are not formed. Instead, a part of the uncured thermosetting resin 6 on the foam core 40 side of the prepregs 4A, which has been given fluidity by heating, enters the voids in the foam core 40. Then, heating and curing the thermosetting resin 6 in a state where the part of the thermosetting resin 6 has entered the voids in the foam core 40 allows directly bonding the thermosetting resin 6 to the foam core 40.

Therefore, the sandwich structure 1B in which the thermosetting resin 6 has been directly bonded to the foam core 40 in a state where the part of the thermosetting resin 6 on the foam core 40 side of the CFRP 3A plies has entered the voids in the foam core 40 is produced.

Also in a case of bonding the prepregs 4A to the foam core 40, it is necessary to heat them in a low-pressure environment of 1 to 2 atmospheres so as not to crush the foam core 40, similar to a case of bonding the prepregs 4A to the honeycomb core 2. Therefore, it is appropriate to use an autoclave apparatus or an oven as the heating device H used in process P44.

Although the sandwich structure 1B can be produced without curing or semi-curing the surface layer 30 first under a high pressure, similar to the method of producing the sandwich structure 1 shown in FIG. 1 or FIG. 2, curing or semi-curing the surface layer 30 first under a high pressure of 3 to 8 atmospheres using the autoclave apparatus A as shown in process P42 of FIG. 10 can improve the appearance of the sandwich structure 1B.

As described above, also when the core material is the foam core 40, adhesive films or adhesive layers can be omitted by reducing the VF of the prepregs 4A down to a range of not less than 20 volume% and not more than 40 volume% while increasing the RC of the prepregs 4A up to a range of not less than 50 mass% and not more than 70 mass% so as to improve the adhesion of the prepregs 4A to the foam core 40. As a result, when the prepregs 4A each consisting of a thin layer material having a thickness of 0.05 mm to 0.15 mm are thermally cured to form the skins 3 of the sandwich structure 1B, the weight of the sandwich structure 1B can be reduced compared to the conventional sandwich structure in which FRP plies are bonded to a foam core with adhesive films or adhesive layers. In addition, curing or semi-curing the surface layer 30 first under a high pressure can improve the appearance of the sandwich structure 1B.

(Other Embodiments)

For example, the prepregs 4 and the honeycomb core 2 may also be pressurized by pressing an upper mold although a case where atmospheric pressure is used for the pressurization was described in each of the above-mentioned embodiments. That is, the prepregs 4 and the honeycomb core 2 may be pressed using a press.

**Claims**

1. A sandwich structure comprising:

   at least one first ply of carbon fiber reinforced plastic including first carbon fibers and first thermoset resin which is matrix reinforced with the first carbon fibers;
   at least one second ply of carbon fiber reinforced plastic including second carbon fibers and second thermoset resin which is matrix reinforced with the second carbon fibers; and
   a core sandwiched between the at least one first ply of the carbon fiber reinforced plastic and the at least one second ply of the carbon fiber reinforced plastic, the core being a honeycomb core or a foam core,
   wherein a first ply thickness of the at least one first ply of the carbon fiber reinforced plastic and a second ply thickness of the at least one second ply of the carbon fiber reinforced plastic are each not less than 0.05 mm and not more than 0.15 mm,
   wherein the first thermoset resin is directly bonded to the core without interposing any other layer between the first thermoset resin and the core, and
   wherein the second thermoset resin is directly bonded to the core without interposing any other layer between the second thermoset resin and the core.

2. An aircraft including a structural material made of the sandwich structure according to claim 1.

3. A method of producing a sandwich structure,
   the sandwich structure comprising:

   at least one first ply of carbon fiber reinforced plastic;
   at least one second ply of carbon fiber reinforced plastic; and
   a core sandwiched between the at least one first ply of the carbon fiber reinforced plastic and the at least one second ply of the carbon fiber reinforced plastic, the core being a honeycomb core or a foam core,
   the method comprising:

   using a first prepreg sheet, of which thickness is not less than 0.05 mm and not more than 0.15 mm, as a material of the at least one first ply of the carbon fiber reinforced plastic, the first prepreg sheet including first carbon fibers and first uncured thermoset resin which is matrix reinforced with the first carbon fibers;
   using a second prepreg sheet, of which thickness is not less than 0.05 mm and not more than 0.15 mm, as a material of the at least one second ply of the carbon fiber reinforced plastic, the second prepreg sheet including second carbon fibers and second uncured thermoset resin which is matrix reinforced with the second carbon fibers;
   heating and curing the first uncured thermoset resin with the first uncured thermoset resin in direct contact with one side of the core without interposing any other layer between the first uncured thermoset resin and the core so that the first cured thermoset resin is directly bonded to the one side of the core; and
heating and curing the second uncured thermoset resin with the second uncured thermoset resin in direct contact with another side of the core without interposing any other layer between the second uncured thermoset resin and the core so that the second cured thermoset resin is directly bonded to the another side of the core.

4. The method according to claim 3,
wherein a fiber volume of the first prepreg sheet and a fiber volume of the second prepreg sheet are each not less than 20 volume% and not more than 40 volume%.

5. The method according to claim 3 or 4,
further comprising:

curing or semi-curing at least one surface ply by heating a third prepreg sheet or a laminate of prepreg sheets, including the third prepreg sheet, under pressure, the third prepreg sheet being a material of a carbon fiber reinforced plastic ply which does not directly contact with the core and forms one surface of the sandwich structure;
disposing the core sandwiched between the first prepreg sheet and the second prepreg sheet, on the cured or semi-cured at least one surface ply directly or with another prepreg interposed; and
producing the sandwich structure including the cured at least one surface ply by heating and curing the first uncured thermoset resin and the second uncured thermoset resin disposed on the cured at least one surface ply, or heating and curing the semi-cured at least one surface ply, the first uncured thermoset resin disposed on the semi-cured at least one surface ply and the second uncured thermoset resin disposed on the semi-cured at least one surface ply.

6. The method according to any one of claims 3 to 5,
further comprising:
using a fourth prepreg sheet, of which a fiber volume is more than 40 volume% and not more than 60 volume%, as another material of the at least one first ply of the carbon fiber reinforced plastic, the fourth prepreg sheet including uncured thermoset resin which is not brought into direct contact with the core.

4A
5 6

AUTOCLAVE
APPARATUS
OR OVEN
(LOW PRESSURE)

H

4A,3A

6  5  B

7  2

M

VACUUM
DEVICE

V

1

3  3A

7  2

5 6

(P1) LAMINATING

(P2) BONDING AND
CURING

(P3) TAKING OUT

FIG. 1

2

FIG. 2

AUTOCLAVE
APPARATUS
OR OVEN
(LOW
PRESSURE)

H

5  6

4B,3A   4A,3A
          B

6    5

3   1   3A

2

2

2

4A
4B   4

7

7

M

M

5  6

VACUUM
DEVICE

V

(P11) LAMINATING    (P12) BONDING AND    (P13) TAKING OUT
                    CURING

# FIG. 3

10

12   11
     13

# FIG. 4

FIG. 5

FIG. 6

FIG. 7

FIG. 8

FIG. 9

EP 4 512 610 A1

FIG. 10

Europäisches Patentamt

European Patent Office

Office européen des brevets

# EUROPEAN SEARCH REPORT

Application Number

EP 24 19 1144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 927 737 A1 (TORAY INDUSTRIES [JP]) 7 July 1999 (1999-07-07) | 1-3,5 | INV. B32B5/26 |
| Y | * paragraph [0047] * | 4,6 | B32B3/12 |
| | * paragraph [0125] - paragraph [0126] * | | B32B5/18 |
| | * example 1 * | | B32B5/24 |
| | * claims 1-3,22 * | | B32B7/02 |
| | ----- | | |
| X | US 2022/017698 A1 (HORIKAWA MIKI [JP] ET AL) 20 January 2022 (2022-01-20) | 1-3,5 | |
| Y | * paragraph [0002] * | 4,6 | |
| | * paragraph [0078] * | | |
| | * paragraph [0115] - paragraph [0116] * | | |
| | * paragraph [0143] * | | |
| | * claims 1-15 * | | |
| | ----- | | |
| X | EP 3 967 490 A1 (VON ROLL SCHWEIZ AG [CH]) 16 March 2022 (2022-03-16) | 1-3,5 | |
| Y | * paragraph [0022] * | 4,6 | |
| | * paragraph [0078] * | | |
| | * claims 1, 17 * | | |
| | ----- | | TECHNICAL FIELDS SEARCHED (IPC) |
| Y | US 2020/384724 A1 (HOSHINA YUSUKE [JP] ET AL) 10 December 2020 (2020-12-10) | 4,6 | B32B |
| | * paragraph [0027] * | | |
| | * paragraph [0031] * | | |
| | * claims 1-6 * | | |
| | ----- | | |

The present search report has been drawn up for all claims

| Place of search | Date of completion of the search | Examiner |
|---|---|---|
| The Hague | 10 January 2025 | Sanchez Perucha, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 1144

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | | Publication date | Patent family member(s) | | Publication date |
|---|---|---|---|---|---|
| EP 0927737 | A1 | 07-07-1999 | DE | 69834800 T2 | 16-05-2007 |
| | | | EP | 0927737 A1 | 07-07-1999 |
| | | | JP | 3661194 B2 | 15-06-2005 |
| | | | US | 6429157 B1 | 06-08-2002 |
| | | | WO | 9902586 A1 | 21-01-1999 |
| US 2022017698 | A1 | 20-01-2022 | EP | 3889207 A1 | 06-10-2021 |
| | | | ES | 2987828 T3 | 18-11-2024 |
| | | | JP | 7086218 B2 | 17-06-2022 |
| | | | JP | WO2020111065 A1 | 21-10-2021 |
| | | | TW | 202028356 A | 01-08-2020 |
| | | | US | 2022017698 A1 | 20-01-2022 |
| | | | WO | 2020111065 A1 | 04-06-2020 |
| EP 3967490 | A1 | 16-03-2022 | CN | 116507491 A | 28-07-2023 |
| | | | EP | 3967490 A1 | 16-03-2022 |
| | | | EP | 4210945 A1 | 19-07-2023 |
| | | | US | 2023331945 A1 | 19-10-2023 |
| | | | WO | 2022053472 A1 | 17-03-2022 |
| US 2020384724 | A1 | 10-12-2020 | CN | 112046093 A | 08-12-2020 |
| | | | JP | 7005557 B2 | 21-01-2022 |
| | | | JP | 2020199643 A | 17-12-2020 |
| | | | TW | 202045596 A | 16-12-2020 |
| | | | US | 2020384724 A1 | 10-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018174217 A
- JP 2013001006 A
- JP S58082755 A
- JP S61023385 Y
- JP 2019156982 A
- JP 2024067864 A